# EUROPÄISCHE PATENTSCHRIFT

(11) **EP 0 413 172 B1**
(45) Veröffentlichungstag und Bekanntmachung des Hinweises auf die Patenterteilung: **11.01.1995**
(21) Anmeldenummer: 90114145.7
(22) Anmeldetag: 24.07.1990
(51) Int. Cl.: G05D 16/20, F16K 31/06

(54) **Verfahren zum Steuern des Drucks mittels eines Magnetventils.**
Method to control the pressure with a magnetic valve.
Procédé de régulation d'une pression à l'aide d'une soupape magnétique.

(30) Priorität: 17.08.1989 DE 3927110
(43) Veröffentlichungstag der Anmeldung: 20.02.1991
(73) Patentinhaber: ROBERT BOSCH GMBH, 70442 Stuttgart (DE)
(72) Erfinder: Stumpe, Werner, Dipl.-Ing., D-7000 Stuttgart 50 (DE)

(56) Entgegenhaltungen:
- EP-A- 0 179 366
- WO-A-88/02510
- DE-A- 3 036 355
- DE-A- 3 041 984
- DE-A- 3 141 556
- DE-A- 3 400 564
- DE-A- 3 636 141
- GB-A- 2 192 737

## Beschreibung

Die Erfindung bezieht sich auf ein Verfahren nach der Gattung des Hauptanspruches. Ein derartiges Verfahren ist bekannt (DE-OS 34 00 564).

Das bei der Durchführung des Verfahrens verwendete Magnetventil führt entsprechend der Größe des Erregerstroms seine Schaltarbeit durch; es ist daher ein Proportional-Magnetventil. Vorzugsweise wird dieses Magnetventil so ausgelegt, daß es in stromlosem Zustand eine Vorratsdruckquelle abriegelt und eine nachgeschaltete Druckwechselkammer (welche z.B. einem Verbraucher oder einer Steuerkammer eines Relaisventils vorgeordnet ist) mit der Außenluft verbindet.

Bei einem derartigen Proportional-Magnetventil tritt das Problem auf, daß die Öffnungskräfte gegen den Vorratsdruck unterschiedlich sind, insbesondere deshalb, weil der Vorratsdruck nicht immer gleich ist. Dadurch leidet die Genauigkeit der Drucksteuerung.

### Vorteile der Erfindung

Das eingangs genannte Verfahren mit den kennzeichnenden Verfahrensschritten hat demgegenüber den Vorteil, daß der Einfluß von wechselnden Öffnungskräften gegen den Vorratsdruck eliminiert wird. Damit ist erreicht, daß die Genauigkeit der Drucksteuerung verbessert wird.

Weitere Vorteile der Erfindung ergeben sich aus den Merkmalen des Unteranspruchs und aus der Beschreibung.

### Zeichnung

Ein Anwendungsbeispiel der Erfindung ist in der Zeichnung dargestellt und in der nachfolgenden Beschreibung näher erläutert. Es zeigen: Figur 1 ein Magnetventil in der Ausgangsstellung (Druckabbaustellung), Figur 2 das Magnetventil in Mittelstellung (Druckhaltestellung), Figur 3 das Magnetventil in Druckaufbaustellung, Figur 4 ein Blockschaltbild für die Stromzuführung zur Magnetspule des Magnetventiles und Figur 5 ein Diagramm.

### Beschreibung des Ausführungsbeispieles

Ein Magnetventil 1 hat ein zweiteiliges Gehäuse. In einem Gehäuseoberteil 2 ist eine Magnetspule 3 mit Stromanschlüssen angeordnet, und in einem Gehäuseunterteil 4 ist ein Doppelventil 5 mit einem Vorrats-Anschluß 6, einem Verbraucher-Anschluß 7 und einer Entlastungsstelle 8 vorgesehen. Innerhalb der Magnetspule 3 ist im Gehäuseoberteil 2 ein Anker 9 angeordnet, der einen Stiftansatz 10 aufweist, an dem ein ringscheibenförmiger Auslaß-Ventilsitz 11 befestigt ist. Der Auslaß-Ventilsitz 11 ist über eine Ringmembran 12 im Gehäuse 2, 4 axialbeweglich angeordnet, wobei die Ringmembran 12 eine Außenluft-Kammer 13 von einer Druckwechsel-Kammer 14 trennt. Eine in der Druckwechsel-Kammer 14 angeordnete Druckfeder 25 greift an der ankerabgewandten Seite des Ringscheiben-Auslaß-Ventilsitzes 11 an.

Im Gehäuseunterteil 4 ist ein gehäusefester Einlaß-Ventilsitz 15 vorgesehen, der in einer Vorrats-Kammer 16 liegt. Der Einlaß-Ventilsitz 15 arbeitet mit einem Ventilschließkörper 17 zusammen und bildet mit diesem ein Einlaßventil 15/17. Der Ventilsitzkörper 17 trägt einen Stift 18, an dessen anderem Ende ein Ventilschließkörper 19 für ein Auslaßventil 11/19 befestigt ist. Eine Ventilfeder 20 ist an den Ventilschließkörper 17 angesetzt und hält gewöhnlich das Einlaßventil 15/17 geschlossen.

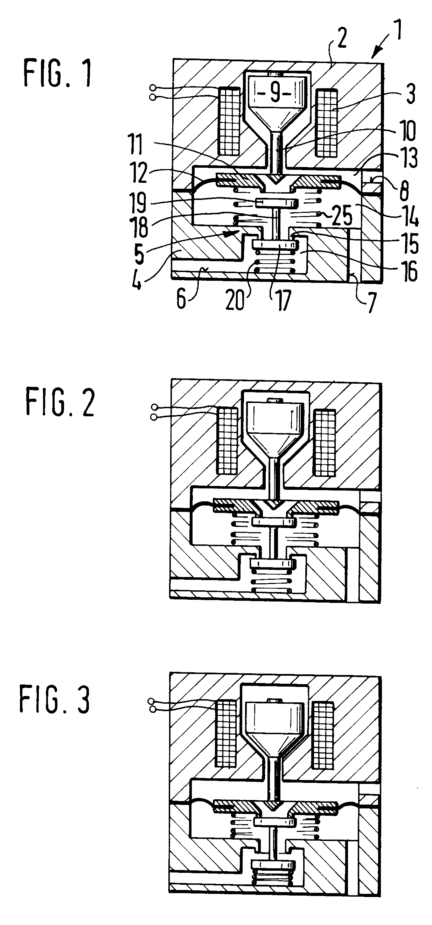

Die Figur 1 zeigt das Magnetventil 1 in seiner Ausgangsstellung, in welcher der Vorrats-Anschluß 6 abgeschlossen ist und ein mit dem Verbraucher-Anschluß 7 verbundener Verbraucher über das offene Auslaßventil 11/19 entlastet ist (Druckabbaustellung, Entlüftungsstellung).

Die Figur 2 stellt eine Mittelstellung des Magnetventils 1 dar, bei der sowohl der Verbraucher-Anschluß 7 als auch der Vorrats-Anschluß 6 abgeriegelt sind. Bei dieser Ventilstellung wird im Verbraucher ein eingesteuerter Druck gehalten (Druckhaltestellung).

In der Figur 3 ist das Magnetventil 1 in seiner Druckaufbau-Stellung gezeigt. Dabei ist das Auslaßventil 11/19 geschlossen und das Einlaßventil 15/17 ist voll geöffnet.

Diese drei dargestellten Ventilstellungen sind aber nur ausgewählt aus einer praktisch unbegrenzten Zahl von Stellungen, die durch eine entsprechende Ansteuerung der Magnetspule 3, oder anders ausgedrückt, durch Änderung des Erregerstromes möglich sind.

In Abhängigkeit vom Erregerstrom wird der Druck in der Druckwechsel-Kammer 14 eingestellt.

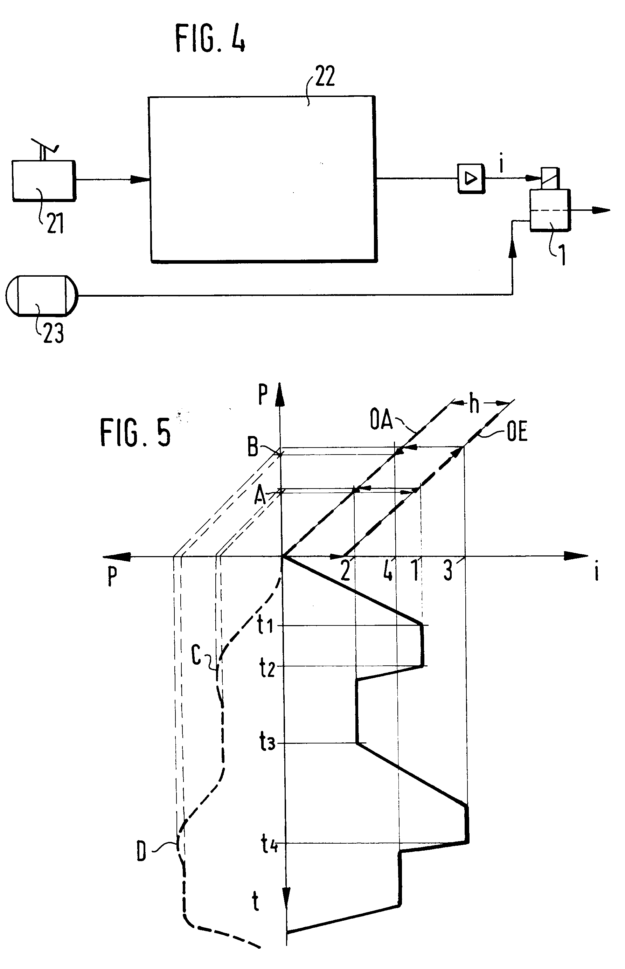

Eine elektronische Erregerstrom-Steuervorrichtung 22 mit digitaler Signalverarbeitung erhält eine Vorgabe von einem Sollwertgeber 21 (Figur 4). Die Ansteuerkennlinien für Druckaufbau und für Druckabbau (Entlüftungskennlinie) werden versuchsmäßig mit verschiedenen Verbrauchern ermittelt und sind in einem Speicher der elektronischen Steuervorrichtung 22 abgespeichert. Außerdem wird die Hysterese zwischen Druckaufbau und -abbau berücksichtigt, so wie es in der Druckschrift DE-A-34 00 564 beschrieben ist. Die Steuervorrichtung 22 steuert das Magnetventil 1 an, welches an einen Druckmedium-Vorrat 23 angeschlossen ist. Das Magnetventil 1 steht mit nicht dargestellten Verbrauchern in Verbindung.

### Wirkungsweise

Ausgegangen wird vom Magnetventil 1 in seiner unbetätigten Normalstellung (Figur 1).

Vom Sollwertgeber 21 wird der Steuervorrichtung 22 eine Größe vorgegeben. Die Steuervorrichtung 22 liefert das Ansteuersignal für die Magnetspule 3 des Magnetventils 1. Zum Umschalten des Magnetventils 1 wird die Magnetspule 3 bestromt. Die Magnetkraft ist annähernd proportional dem mittleren Strom i, der durch die Magnetspule 3 fließt. Der Anker 9 bewegt sich nach unten und der Schließkörper 19 legt sich an den Auslaß-Ventilsitz 11 an. Die Verbindung vom Verbraucher-Anschluß 7 zur Entlastungsstelle 8 ist geschlossen.

Eine weitere Stromerhöhung bewirkt ein Abheben des Schließkörpers 17 von dem Einlaß-Ventilsitz 15. Druckmedium vom Vorrat 23 strömt dann in die Druckwechselkammer 14 und von dort über den Verbraucher-Anschluß 7 zum Verbraucher.

Der ansteigende Verbraucherdruck wirkt in der Druckwechselkammer 14 auf die Membran 12 und stellt den Anker 9 gegen die Magnetkraft zurück. Das Doppelventil 5 erreicht dann seine Mittelstellung (Figur 2), in der sowohl das Einlaßventil 15/17 als auch das Auslaßventil 11/19 geschlossen sind. Dann bleibt der Verbraucherdruck konstant.

Wird die Stromstärke gesenkt, übernimmt immer mehr der Einlaß-Ventilsitz 15 die Abstützung des Schließkörpers 17, bis sich schließlich der Schließkörper 19 vom Auslaß-Ventilsitz 11 abhebt. Dann wird der Druck in der Druckwechselkammer 14 zur Entlastungsstelle 8 hin abgebaut.

Umgekehrt, d.h. bei steigender Stromstärke, stützt sich der Schließkörper 19 immer mehr an dem Auslaß-Ventilsitz 11 ab, bis sich der Schließkörper 17 von dem Einlaß-Ventilsitz 15 abhebt.

Dabei wird die Druckanstiegssteuerung des Erregerstromes gemäß Vorgabe der elektronischen Steuervorrichtung 22 so durchgeführt, daß der ausgesteuerte Druck kurzzeitig überhöht und anschließend entlang der vorher gespeicherten Entlüftungskennlinie eingehalten wird. Dabei sind die Übersteuerungszeiten auf das Volumen bzw. das Druckaufbauverhalten des nachgeschalteten Verbrauchers, der ein Bremszylinder oder die Steuerkammer eines Relaisventils sein kann, abgestimmt. Auf diese Weise werden wechselnde Öffnungskräfte gegen den in Grenzen schwankenden Vorratsdruck eliminiert. Und es ist erreicht, daß die Arbeit des Magnetventils 1 genauer ist, wodurch es besonders geeignet ist als Drucksteuerventil in Anlagen mit mehreren Ventilen, weil es dort besonders auf exakt gleiche Drücke ankommt.

Vorteilhaft ist es dabei, daß von dem Magneten 3, 9 keine zusätzlichen Reibkräfte überwunden werden müssen. Dadurch entstehen keine Änderungen der Ventil-Öffnungskräfte während der Betriebszeit des Magnetventiles 1. Bei Verwendung mehrerer dieser Magnetventile 1 in einem einzigen System ist der Gleichlauf der Schaltarbeit aller Magnetventile gewährleistet.

Der entsprechende Druckverlauf der Ventilkennlinien als Funktion von Strom und Zeit ist in dem Diagramm nach der Figur 5 dargestellt. Dort ist auf der Ordinate nach oben der Druck p in der Druckwechselkammer 14 aufgetragen und auf dem rechten Teil der Abszisse der Strom i. Auf der Ordinate nach unten ist die Zeit t aufgetragen. Auf dem linken Teil der Abszisse ist in Übereinstimmung mit dem oberen Teil der Ordinate ebenfalls der Druck p aufgetragen. Im oberen rechten Quadranten ist die Hysterese h zwischen einer (stabilen) Öffnungskennlinie OA für das Auslaßventil 11/19 und der Schwankungen des Vorratsdrucks unterworfenen Öffnungskennlinie OE für das Einlaßventil 15/17 zu erkennen. Auf der Ordinate sind zwei Druckwerte A und B angegeben, wobei A ein zuerst angefahrener Druckwert und B ein von A aus angefahrener Druckwert ist.

Zum Schalten des Einlaßventils 15/17 in die Offenstellung wird der Strom i bis zur Zeit t1 von 0 auf z.B. 1 erhöht und bis t2 gehalten. Der Stromanteil von 0 bis zum Ursprung der Öffnungskennlinie OE des Einlaßventils 15/17 wird benötigt, um den auf dem Ventilschließkörper 17 lastenden Vorratsdruck zu überwinden. Nach dem Öffnen des Einlaßventils 15/17 erreicht der Druck p auf der Öffnungskennlinie OE einen dem Strom i im Punkt 1 entsprechenden Wert. Das Magnetventil 1 nimmt nun seine Mittelstellung ein, in der das Einlaßventil 15/17 und das Auslaßventil 11/19 geschlossen sind. Der in der Druckwechselkammer 14 des Magnetventils 1 herrschende Druck p ist jedoch etwas über "A" angestiegen, wie der Kurvenabschnitt C im linken unteren Quadranten zeigt. Nach Ablauf von t2 wird daher der Strom i auf "2" gesenkt, so daß sich der Druck durch Öffnen des Auslaßventils 11/19 entlang der im Speicher der Steuervorrichtung 22 gespeicherten Entlüftungskennlinie, welche die Öffnungskennlinie OA des Auslaßventils 11/19 ist, auf "A" einstellt. Ab t3 wird der Strom i beispielsweise auf "3" erhöht, damit der Druck p durch erneutes Öffnen des Einlaßventils 15/17 auf "B" ansteigt. Auch dabei gibt es ein "Überschießen" des Druckes p bei einem Abschnitt D. Bei t4 wird der Strom dann wieder auf den "B" auf der Entlüftungskennlinie OA zugeordneten Strom "4" eingestellt. Anschließend folgt bei dem dargestellten Beispiel Strom- und Druckabsenkung auf 0.

Der mittlere Magnetstrom kann gemäß bekannten Prinzipien eingestellt werden, z.B. als konstanter Wert oder pulsbreitenmoduliert durch Ausnutzung der Glättungseigenschaften der Magnetspule.

## Patentansprüche

1. Verfahren zum Steuern des einem Verbraucher zuzuführenden Druckes anhand gespeicherter Kennlinien für Druckaufbau und Druckabbau mittels eines Magnetventils (1) mit einer Erregerstrom-Steuervorrichtung (22) zur Ansteuerung einer Magnetspule (3), deren Anker (9) ein Einlaßventil (15/17) und ein Auslaßventil (11/19) erregerstromabhängig betätigt, wobei das Einlaßventil (15/17) die Verbindung zwischen einem Vorrats-Anschluß (6) und einem Verbraucher-Anschluß (7) und das Auslaßventil (11/19) die Verbindung zwischen dem Verbraucher-Anschluß (7) und einer Entlastungsstelle (8) überwachen, und wobei in einer Mittelstellung des Magnetventils (1) das Einlaßventil (15/17) und das Auslaßventil (11/19) geschlossen sind, gekennzeichnet durch die Verfahrensschritte:
- die Magnetspule (3) wird mit einem Erregerstrom solcher Größe angesteuert, daß in der auf Öffnen des Einlaßventils (15/17) für Druckaufbau folgenden Mittelstellung des Magnetventils (1) der Druck am Verbraucher-Anschluß (7) den im Verbraucher einzustellenden Druck überschreitet,
- der Druck am Verbraucher-Anschluß (7) wird während einer den Druckaufbau übersteigenden Übersteuerungszeit aufrechterhalten,
- der Erregerstrom wird auf einen Wert vermindert, bei dem das Auslaßventil (11/19) durch kurzzeitiges Öffnen den Druck am Verbraucher-Anschluß (7) auf den im Verbraucher einzustellenden Druck einsteuert.

2. Verfahren nach Anspruch 1, dadurch gekennzeichnet, daß die Übersteuerungszeit in vom Druckaufbauverhalten des Verbrauchers abhängiger Dauer einstellbar ist.

## Claims

1. Method for controlling the pressure, to be fed to an actuator, by means of stored characteristic curves for pressure increase and pressure reduction by means of a solenoid valve (1) with an exciter-current control device (22) for actuating a solenoid (3) whose armature (9) actuates an inlet valve (15/17) and an outlet valve (11/19) as a function of the exciter current, the inlet valve (15/17) monitoring the connection between a supply port (6) and an actuator port (7) and the outlet valve (11/19) monitoring the connection between the actuator port (7) and a pressure relief point (8), and the inlet valve (15/17) and the outlet valve (11/19) being closed in a central position of the solenoid (1), characterized by the method steps:
- the solenoid (3) is actuated with an exciter current of such a size that in the central position of the solenoid valve, (1) which position follows opening of the inlet valve (15/17) for pressure increase, the pressure at the actuator port (7) exceeds the pressure to be set in the actuator,
- the pressure at the actuator port (7) is maintained during an overload time which exceeds the pressure increase,
- the exciter current is reduced to a value at which the outlet valve (11/19), by briefly opening, regulates the pressure at the actuator port (7) to the pressure to be set in the actuator.

2. Method according to Claim 1, characterized in that the overload time can be set to a period dependent on the pressure increase behaviour of the actuator.

## Revendications

1. Procédé pour commander la pression alimentant un utilisateur à l'aide de courbes caractéristiques mises en mémoire pour la montée et la chute de pression à l'aide d'une soupape électromagnétique (1), comprenant un dispositif de commande (22) du courant d'excitation pour commander une bobine électromagnétique (3) dont l'induit (9) actionne une soupape d'entrée (15/17) et une soupape de sortie (11/19) en fonction du courant d'excitation, la soupape d'entrée (15/17) surveillant la liaison entre un branchement d'alimentation (6) et un branchement d'utilisateur (7), et la soupape de sortie (11/19) surveillant la liaison entre le branchement d'utilisateur (7) et un point de décharge (8), et, en position intermédiaire de la soupape électromagnétique (1), la soupape d'entrée (15/17) et la soupape de sortie (11/19) sont fermées,
procédé caractérisé par les étapes suivantes :
- on commande la bobine électromagnétique (3) avec un courant d'excitation d'intensité telle que, dans la position intermédiaire de la soupape électromagnétique (1) qui suit l'ouverture de la soupape d'entrée (15/17) pour la montée en pression, la pression du branchement d'utilisateur (7) dépasse la pression à régler sur l'utilisateur,
- la pression sur le branchement d'utilisateur (7) est maintenue pendant une durée d'excursion de commande, qui dépasse la montée en pression,
- le courant d'excitation est réduit à une valeur pour laquelle la soupape de sortie (11/19) commande par une ouverture de courte durée, la pression sur le branchement d'utilisateur (7), à un niveau correspondant à la pression à régler sur l'utilisateur.

2. Procédé selon la revendication 1, caractérisé en ce que la durée d'excursion de commande se règle sur une durée dépendant du comportement de montée en pression de l'utilisateur.
